# FASCICULE DE BREVET EUROPEEN

(11) **EP 0 643 527 B1**
(45) Date de publication et mention de la délivrance du brevet: **21.11.2001**
(21) Numéro de dépôt: 94401841.5
(22) Date de dépôt: 10.08.1994
(51) Int. Cl.: H04N 1/32, H04N 1/327

(54) **Equipement téléphonique capable de relier un terminal et une ligne téléphonique**
Telefongerät geeignet um ein Terminal und eine Telefonleitung miteinander zu verbinden
Telephone equipment capable of connecting a terminal and a telephone line

(30) Priorité: 14.09.1993 FR 9310910
(43) Date de publication de la demande: 15.03.1995
(73) Titulaire: SOCIETE D'APPLICATIONS GENERALES D'ELECTRICITE ET DE MECANIQUE SAGEM, 75783 Paris Cédex 16 (FR)
(72) Inventeur: Sarradin, Jean-Louis, F-95190 Fontenay en Parisis (FR); Klein, Patrick, F-95520 Osny (FR)
(74) Mandataire: Bloch, Gérard

(56) Documents cités:
- EP-A- 0 454 452
- EP-A- 0 551 950

## Description

Comme équipement téléphonique, on considérera, mais sans qu'il ne s'agisse d'une limitation de la portée de la demande, un télécopieur.

On a déjà proposé de relier un télécopieur à de nombreux terminaux, comme par exemple un terminal vidéotex, un répondeur-enregistreur, etc. Le télécopieur, à l'écoute des signaux de ligne reçus, peut prendre un appel entrant et l'aiguiller vers le terminal qui lui est raccordé. Un tel télécopieur est par exemple décrit dans la demande EP-A-0 551 950 de la demanderesse.

Tous ces terminaux n'ont qu'un rôle passif, incapables d'émettre un appel sortant et d'accéder, par eux-mêmes, à la ligne.

La demanderesse s'est posé le problème du raccordement d'un équipement téléphonique à un terminal ayant vocation à initier une communication téléphonique, et, par exemple, un terminal de paiement.

C'est ainsi que la demanderesse propose son invention qui concerne un équipement téléphonique agencé pour être raccordé à une ligne d'un réseau téléphonique et comportant des moyens de liaison pour relier la ligne et un terminal, équipement caractérisé par le fait qu'il comporte des moyens de raccordement agencés pour être raccordés au terminal et recevoir des demandes d'appel sortant et commander des moyens de liaison.

Ainsi, et selon les besoins, la ligne téléphonique peut être utilisée par le terminal ou l'équipement téléphonique lui-même.

De préférence, l'équipement téléphonique est un télécopieur comportant une imprimante avec des moyens de commande de l'imprimante auxquels sont reliés les moyens de raccordement.

L'imprimante du télécopieur peut alors servir d'imprimante pour le terminal, ce qui est particulièrement intéressant s'il s'agit d'un terminal de paiement.

L'invention sera mieux comprise à l'aide de la description suivante de la forme de réalisation préférée de l'équipement téléphonique de l'invention, en référence au dessin annexé, sur lequel :

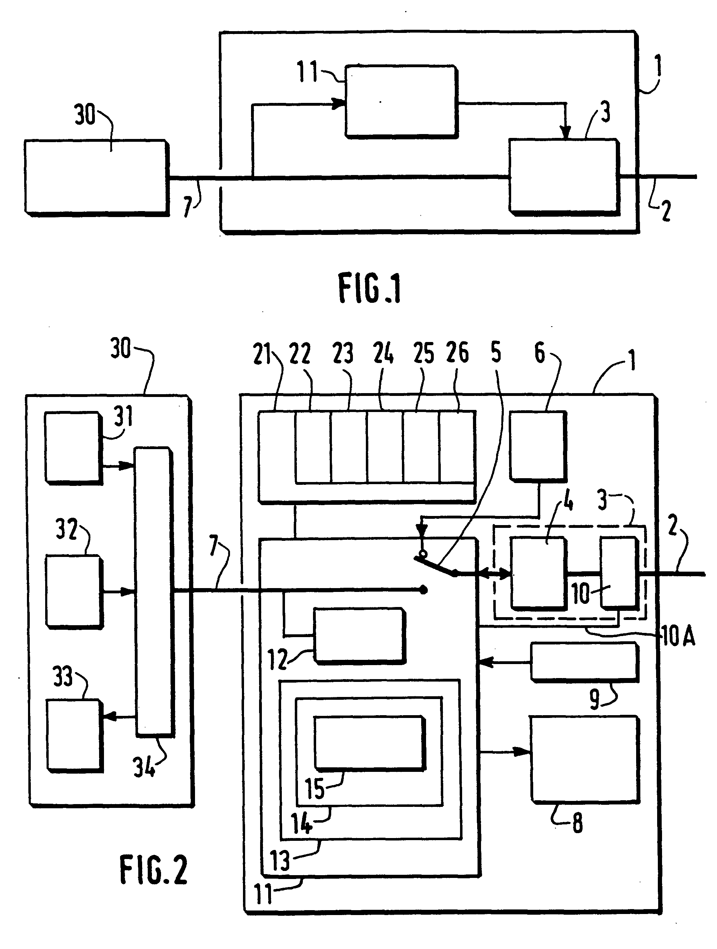

- la figure 1 est une réprésentation par blocs fonctionnels de l'équipement téléphonique de l'invention et du terminal et
- la figure 2 est une représentation plus détaillée des blocs fonctionnels de la figure 1.

L'équipement téléphonique est ici un télécopieur 1 raccordé à une ligne 2 du réseau téléphonique commuté. Un terminal 30, terminal de paiement par carte à puce dans cet exemple, est raccordé, par une liaison 7, à un circuit d'interface 3 du télécopieur 1 qui est relié à la ligne 2, et à un microprocesseur 11 commandant le circuit d'interface 3. Il s'agit ici d'un terminal dit à mémorisation de transactions. L'invention s'appliquerait tout aussi bien à un terminal en ligne.

Au microprocesseur 11 est associée une mémoire 21, qui fait partie fonctionnellement du microprocesseur 11 et aurait pu y être, pour tout ou partie, physiquement intégrée. La mémoire 21 contient, dans une zone 22, un logiciel de gestion de demandes d'appel sortant vers la ligne 2. Deux autres zones, 23 et 24, de la mémoire 21 comportent respectivement un protocole de gestion de liaison de données de type télécopie et un protocole de gestion de liaison de données de type monétique pour terminal de paiement par carte bancaire. Il y est aussi prévu une zone mémoire 25 pour mémoriser temporairement les transactions journalières du terminal 30 et les transmettre à heure fixe à un centre de traitement bancaire.

Le circuit d'interface 3 comporte un modem 4 relié, d'un côté, à la ligne 2 à travers un circuit 10 de prise de ligne et, du côté opposé, au point commun d'un aiguilleur 5 à deux voies,représenté schématiquement comme un contact de relais et intégré, ici, dans le microprocesseur 11. L'aiguilleur 5 est relié respectivement, par ses deux voies, sous la commande du microprocesseur 11, à une tête d'analyse, ou scanner, 6 du télécopieur 1 et au terminal 30 par la liaison 7, ici filaire. Le microprocesseur 11 est relié au circuit 10 par une liaison bidirectionnelle de signalisation 10A lui permettant de gérer l'établissement et la rupture des communications entrantes et sortantes avec la ligne 2.

Une imprimante 8 du télécopieur 1 est commandée par le microprocesseur 11 sous la gestion d'un logiciel d'impression contenu dans une zone 26 de la mémoire 21. L'établissement d'un appel sortant du télécopieur 1 s'effectue au moyen d'un clavier de numérotation 9 relié microprocesseur 11 pour lui transmettre une demande d'appel sortant vers la ligne 2, puis transmettre le numéro demandé. La gestion des échanges de signalisation avec le réseau téléphonique à travers la ligne 2, pour établir et rompre les communications, est assurée ensuite par le logiciel de la zone mémoire 22.

Pour gérer les données du terminal 30, y entrant par un lecteur de carte 31 et par un clavier 32 ou en sortant par un afficheur 33, le microprocesseur 11 comporte un bloc de calcul 12 associé à un port d'entrée/sortie relié, à travers la liaison 7, à un microcontrôleur 34 du terminal 30, relié lui-même aux éléments 31-33.

Le microcontrôleur 34 peut transmettre au microprocesseur 11 des demandes d'appel sortant émises à partir du clavier 32. Dans le présent exemple, le terminal 30 transmet en temps réel à la zone mémoire 25, par le microprocesseur 11, les transactions effectuées par lecture d'une carte à puce et, si le montant dépasse un seuil prédéterminé, c'est le microprocesseur 11 lui-même qui demande la connexion, par la ligne 2, du terminal 30 à un centre serveur validant ou non la transaction.

En cas de collision entre deux demandes d'accès simultanées, provenant respectivement du télécopieur 1, pour ses propres fonctions de télécopie, et du terminal 30, ou du microprocesseur 11 pour les fonctions monétiques du terminal 30, celles-ci sont transmises à un bloc de calcul 13 du microprocesseur 11, chargé de choisir, et satisfaire, l'une d'elles en fonction de critères de priorité prédéterminés, mémorisés localement.

Dans cet exemple, le bloc de calcul 13 comporte un bloc de calcul 14 traitant les demandes d'appel sortant engendrées alors que la ligne 2 est déjà occupée pour une communication. Dans ce cas il est prévu ici d'interrompre une communication du télécopieur 1, gérée par le protocole contenu dans la zone mémoire 23, si le terminal 30 émet une demande d'accès à la ligne 2.

Il est de plus prévu, dans cet exemple, qu'un bloc de calcul 15 appartenant au bloc de calcul 14 active alors un bit d'interruption, lu cycliquement par le protocole de transmission contenu en zone 23. Ce protocole (23) traite le bit d'interruption comme étant une demande d'interruption d'émission des données qui proviennent de la tête d'analyse 6 à travers une mémoire tampon non représentée et, en fin de la page de télécopie en cours de transmission, émet les signaux de service prévus dans le protocole (23) pour signaler au télécopieur récepteur une fin de transmission et ainsi interrompre la liaison logique correspondante.

Le bloc de calcul 14 commande ensuite, par la liaison 10A, l'interruption de la liaison physique qui portait la liaison logique ci-dessus, c'est-à-dire commande une libération de la ligne 2 par le circuit 10 de prise de ligne, suivie d'une reprise de la ligne 2 par le circuit 10, après avoir commuté l'aiguilleur 5 pour relier la liaison 7 au modem 4.

On comprendra que, de façon symétrique, il aurait pu être prévu qu'une demande d'accès du télécopieur 1 soit prioritaire sur l'utilisation de la ligne 2 par le terminal 30 et soit prise en compte par le protocole (24) prévu pour le terminal 30.

Dans ce cas comme dans l'autre, la priorité relative entre le télécopieur 1 et le terminal 30 peut être gérée dynamiquement et évoluer au cours du temps, par exemple en fonction du temps écoulé d'occupation de la ligne 2 ou d'après des informations variables de priorité associées aux demandes d'accès, au moyen des claviers 9 ou 32 par exemple.

Le modem 4 fonctionne conformément aux Avis V21, V22, V27 ter et V29 du CCITT pour relier le télécopieur 1 à la ligne 2 et il s'ajoute à cette liste l'Avis V23 lorsqu'il est relié au terminal 30.

A chaque transaction par carte, le terminal 30 transmet au microprocesseur 11, par la liaison 7, des données à imprimer provenant du lecteur 31 et du clavier 32.

Le microprocesseur 11 commande alors leur impression sur l'imprimante 8 au moyen du logiciel contenu dans la zone mémoire 26. Le papier de l'imprimante 8 est prédécoupé par une ligne verticale centrale en pointillés et l'impression a lieu en double, de part et d'autre de cette ligne, de façon à fournir un exemplaire au commerçant possédant le terminal 30 et un autre exemplaire à son client utilisant la carte de paiement. On comprendra qu'il pourrait être prévu que l'imprimante 8 soit logée dans le terminal 30.

Dans le cas où le terminal 30 devrait pouvoir être déplacé aisément, une liaison 7 autre que filaire, telle qu'une liaison hertzienne, conviendrait tout aussi bien.

## Revendications

1. Equipement téléphonique (1) agencé pour être raccordé à une ligne (2) d'un réseau téléphonique et comportant des moyens de liaison (3) pour relier la ligne (2) et un terminal (30), équipement **caractérisé par le fait qu'**il comporte des moyens de raccordement (11,21) agencés pour être raccordés au terminal (30) et recevoir des demandes d'appel sortant et commander les moyens de liaison (3).

2. Equipement téléphonique selon la revendication 1, comprenant un télécopieur (1) qui comporte une imprimante (8) avec des moyens (11,26) de commande de l'imprimante auxquels sont reliés les moyens de raccordement (11,21).

3. Equipement téléphonique selon la revendication 2, dans lequel les moyens de liaison (3) comportent un modem (4) à deux fonctions de transmission de données du télécopieur (1) et de transmission de données du terminal (30).

4. Equipement téléphonique selon l'une des revendications 1 à 3, dans lequel il est prévu un microprocesseur (11,21) partagé entre l'équipement téléphonique (1) et ses moyens de raccordement ainsi que le terminal (30).

5. Equipement téléphonique selon la revendication 4, dans lequel le microprocesseur (11,21) est agencé pour commander des moyens d'affichage (8,33) de données du terminal (30) sous la commande de moyens de saisie de données (31,32) dudit terminal (30).

6. Equipement téléphonique selon l'une des revendications 4 et 5, dans lequel le microprocesseur (11,21) est agencé (13) pour gérer des collisions entre des demandes d'appel sortant du terminal (30) et du télécopieur (1).

7. Equipement téléphonique selon la revendication 6, dans lequel le microprocesseur (11,21) est agencé (14) pour, à réception d'une demande d'appel sortant, interrompre une communication établie avec la ligne téléphonique (2).

8. Equipement selon la revendication 7, dans lequel le microprocesseur (11,21) est agencé (15) pour, avant d'interrompre la communication, modifier le protocole de transmission de données.

9. Equipement téléphonique selon l'une des revendications 4 à 8, dans lequel le terminal (30) étant un terminal de paiement, le microprocesseur (11,21) est agencé pour commander (26) une imprimante (8) commune au télécopieur (1) et au terminal de paiement (30).

10. Equipement téléphonique selon l'une des revendications 1 à 9, dans lequel les moyens de raccordement (3) comportent une liaison (7) hertzienne.

## Patentansprüche

1. Fernsprecheinrichtung (1), die angeordnet ist, um an eine Leitung (2) eines Fernmeldenetzes angeschlossen zu werden und die Verbindungsmittel (3) ausweist, um die Leitung (2) und einen Terminal (30) anzuschließen **dadurch Gekennzeichnet, dass**
die Fernsprecheinrichtung Anschlussmittel (11, 21) aufweist, die angeordnet sind, um an den Terminal (30) angeschlossen zu werden und Abgehendanrufanforderungen zu empfangen und die Verbindungsmittel (3) zu steuern.

2. Fernsprecheinrichtung nach Anspruch 1, ,
**dadurch gekennzeichnet, daß**
die Fernsprecheinrichtung einen Telekopierer (1) aufweist, der einen Drucker (8) mit Mitteln (11, 26) zur Steuerung des Druckers aufweist, mit denen die Anschlussmittel (11, 21) verbunden sind.

3. Fernsprecheinrichtung nach Anspruch 2,
**dadurch gekennzeichnet, daß**
in der Fernsprecheinrichtung die Verbindungsmittel (3) ein Modem (4) mit zwei Funktionen zur Übertragung von Daten des Telekopierers (1) und zur Übertragung von Daten des Terminals (30) aufweisen.

4. Fernsprecheinrichtung nach einem der Ansprüche 1 bis 3,
**dadurch gekennzeichnet, daß**
in der Fernsprecheinrichtung ein Mikroprozessor (11, 21) vorgesehen ist, der zwischen der Fernsprecheinrichtung (1) und ihren Anschlussmitteln sowie dem Terminal (30) aufgeteilt bzw. von diesen gemeinsam benutzt wird.

5. Fernsprecheinrichtung nach Anspruch 4,
wobei der Mikroprozessor (11, 21) angeordnet ist, um Mittel (8, 33) zur Anzeige von Daten des Terminals (30) unter der Steuerung von Datenerfassungsmitteln (31, 32) des Terminals (30) zu steuern.

6. Fernsprecheinrichtung nach einem der Ansprüche 4 oder 5,
wobei der Mikroprozessor (11, 21) angeordnet ist (13), um Überschneidungen zwischen Abgehendanrufanforderungen vom Terminal (30) und vom Telekopierer (1) zu verwalten.

7. Fernsprecheinrichtung nach Anspruch 6,
wobei der Mikroprozessor (11, 21) angeordnet ist (14), um bei Empfang einer abgehenden Anrufanforderung eine mit der Telefonleitung (2) aufgebaute Kommunikation zu unterbrechen.

8. Fernsprecheinrichtung nach Anspruch 7,
wobei der Mikroprozessor (11, 21) angeordnet ist (15) um, vor einer Unterbrechung der Kommunikation das Datenübertragungsprotokoll zu modifizieren.

9. Fernsprecheinrichtung nach einem der Ansprüche 4 bis 8,
wobei der Terminal (30) ein Zahlungsterminal ist und wobei der Mikroprozessor (11, 21) angeordnet ist, um einen Drucker (8) zu steuern (26), der vom Telekopierer (1) und vom Zahlungsterminal (30) gemeinsam genutzt wird.

10. Fernsprecheinrichtung nach einem der Ansprüche 1 bis 9,
wobei die Anschlussmittel (3) eine Funkverbindung (7) umfassen.

## Claims

1. Telephone equipment (1) arranged to be connected to a line (2) of a telephone network and comprising linking means (3) to link the line (2) with a terminal (30), equipment **characterised by** the fact that it comprises connection means (11, 21) arranged to be connected to the terminal (30) and receive outgoing call requests and control the linking means (3).

2. Telephone equipment according to claim 1, comprising a fax machine (1) which includes a printer (8) with control means (11, 26) for the printer which are connected to the connection means (11, 21).

3. Telephone equipment according to claim 2, wherein the linking means (3) comprise a modem (4) with the two functions of transmitting data of the fax machine (1) and transmitting data of the terminal (30).

4. Telephone equipment according to one of claims 1 to 3, wherein a microprocessor (11, 21) is provided, shared between the telephone equipment (1) and its connection means as well as the terminal (30).

5. Telephone equipment according to claim 4, wherein the microprocessor (11, 21) is arranged to control data display means (8,33) for the terminal (30) under the control of data acquisition means (31, 32) of said terminal (30).

6. Telephone equipment according to one of claims 4 and 5, wherein the microprocessor (11, 21) is arranged (13) to manage collisions between outgoing call requests from the terminal (30) and from the fax machine (1).

7. Telephone equipment according to claim 6, wherein the microprocessor (11, 21) is arranged (14) to interrupt, on reception of an outgoing call request, a communication established with the telephone line (2).

8. Equipment according to claim 7, wherein the microprocessor (11, 21) is arranged (15) to modify the data transmission protocol before interrupting the communication.

9. Telephone equipment according to one of claims 4 to 8, wherein the terminal (30) being a payment terminal, the microprocessor (11, 21) is arranged to control (26) a printer (8) which is common to the fax machine (1) and to the payment terminal (30).

10. Telephone equipment according to one of claims 1 to 9, wherein the connection means (3) comprise a Hertzian link (7).
